# EUROPÄISCHE PATENTSCHRIFT

(11) **EP 2 672 660 B1**
(45) Veröffentlichungstag und Bekanntmachung des Hinweises auf die Patenterteilung: **13.08.2014**
(21) Anmeldenummer: 12170769.9
(22) Anmeldetag: 05.06.2012
(51) Int. Cl.: H04L 12/40, H04L 12/26

(54) **Verfahren zur Beeinflussung der Buskommunikation eines Steuergeräts**
Method for influencing the bus communication of a electronical control unit
Méthode pur influencer le communication de bus d'un bloc de contrôle électronique

(43) Veröffentlichungstag der Anmeldung: 11.12.2013
(73) Patentinhaber: dSPACE digital signal processing and control engineering GmbH, 33102 Paderborn (DE)
(72) Erfinder: Franzen, Ortwin Ludger, 33175 Bad Lippspringe (DE); Stolpe, Ralf, 33161 Hövelhof (DE); Kiffmeier, Ulrich, 33428 Harsewinkel (DE)

(56) Entgegenhaltungen:
- DE-A1-102007 048 860
- HILLENBRAND M ET AL: "An Approach to Supply Simulations of the Functional Environment of ECUs for Hardware-in-the-Loop Test Systems Based on EE-architectures Conform to AUTOSAR", RAPID SYSTEM PROTOTYPING, 2009. RSP '09. IEEE/IFIP INTERNATIONAL SYMPOSIUM ON, IEEE, PISCATAWAY, NJ, USA, 23. Juni 2009 (2009-06-23), Seiten 188-195, XP031485613, ISBN: 978-0-7695-3690-3
- PATRICK E LANIGAN ET AL: "Experiences with a CANoe-based fault injection framework for AUTOSAR", DEPENDABLE SYSTEMS AND NETWORKS (DSN), 2010 IEEE/IFIP INTERNATIONAL CONFERENCE ON, IEEE, PISCATAWAY, NJ, USA, 28. Juni 2010 (2010-06-28), Seiten 569-574, XP031729568, ISBN: 978-1-4244-7500-1

## Beschreibung

Die Erfindung betrifft ein Verfahren zur Beeinflussung der Buskommunikation eines Steuergeräts, wobei die Buskommunikation wenigstens eine bushardwareunabhängige erste Kommunikationsschicht und wenigstens eine bushardwareabhängige zweite Kommunikationsschicht umfasst. Verfahren zur Beeinflussung der Buskommunikation eines Steuergeräts werden häufig dann eingesetzt, wenn ein Steuergerät, das mit anderen Kommunikationspartnern über einen Bus verbunden ist bzw. verbunden werden soll, zu testen ist, insbesondere dann, wenn das Kommunikationsverhalten des Steuergeräts selbst Gegenstand der Untersuchung ist. Verfahren zur Beeinflussung der Buskommunikation eines Steuergeräts dienen deshalb häufig dem Test eines Steuergeräts und zur Erprobung des Steuergeräteverhaltens im Fehlerfall. Derartige Verfahren sind beispielsweise bekannt im Rahmen der sog. Restbussimulation, bei der reale Steuergeräte in eine hard- und softwaremäßig simulierte Kommunikationsumgebung eingesetzt und in ihrem Verhalten getestet werden. Solche Verfahren sind aber auch bekannt im Rahmen der Restbussimulation virtueller Steuergeräte.

Die erste und die zweite Kommunikationsschicht können weitere Sub-Kommunikationsschichten umfassen. Der Begriff der "Kommunikationsschicht" ist dabei im Wesentlichen in dem Sinne zu verstehen, wie er dem allgemeinen Verständnis nach für Netzwerk-Protokolle oder Busprotokolle verwendet wird. Jede Kommunikationsschicht stellt üblicherweise Funktionalitäten zur Verfügung, um Informationen aus einer benachbarten Kommunikationsschicht entgegenzunehmen und zu einer weiteren benachbarten Kommunikationsschicht aufbereitet weiterzugeben. Hinsichtlich der zuvor dargestellten Unterteilung in eine bushardwareunabhängige erste Kommunikationsschicht und eine bushardwareabhängige zweite Kommunikationsschicht bedeutet dies konkret, dass die erste Kommunikationsschicht wenigstens eine Information in eine erste Protokoll-Dateneinheit kodiert und an die zweite Kommunikationsschicht überträgt und/oder dass die erste Kommunikationsschicht von der zweiten Kommunikationsschicht die erste Protokoll-Dateneinheit erhält und aus der ersten Protokoll-Dateneinheit die Information dekodiert. Bei der Information handelt es sich in der bushardwareunabhängigen ersten Kommunikationsschicht üblicherweise um ein anwendungsnahes Datum, beispielsweise um einen Messwert, der von dem Steuergerät aufgenommen worden ist und über einen Bus an andere Busteilnehmer versendet wird, oder beispielsweise um eine vom Steuergerät berechnete Größe. Um welchen Bus es sich dabei konkret handelt, ist für die in Rede stehenden Verfahren weder im Stand der Technik noch bei dem erfindungsgemäßen Verfahren von Bedeutung; das Verfahren kann mit beliebigen Datenbussen verwendet werden. Beispiele für in der industriellen Praxis häufig verwendete Bus-Standards sind CAN, LIN oder FlexRay. Die Information wird jedenfalls in Senderichtung, also von der ersten Kommunikationsschicht zur zweiten Kommunikationsschicht kodiert, also beispielsweise um bestimmte Verwaltungsinformationen erweitert, und an busnähere Schichten weitergereicht, vorliegend also an die zweite Kommunikationsschicht. In Sende- und Kodierrichtung wird die Information in die vorgenannte Protokoll-Dateneinheit verpackt. In Empfangs- oder Dekodierrichtung wird die verpackte Information, also die erste Protokoll-Dateneinheit korrespondierend von Verwaltungsinformationen befreit und letztlich die Information als solche zur Verfügung gestellt. Wenn die erste Kommunikationsschicht in der Lage ist, sowohl zu senden als auch zu empfangen, ist sowohl die Funktionalität des Kodierens als auch die Funktionalität des Dekodierens implementiert. Die erste Kommunikationsschicht ist deshalb bushardwareunabhängig, weil in ihr lediglich solche Dienste implementiert sind, die unabhängig von der konkreten Bushardware sind. D. h. die in der bushardwareunabhängigen Schicht realisierten Dienste sind entweder unabhängig vom Bussystem oder abhängig vom Bussystem, aber nicht abhängig von der konkreten Bushardware. Die busunabhängige erste Kommunikationsschicht liegt daher oberhalb der Kommunikationshardwareabstraktionsschichten. Für das Beispiel eines gemäß des AUTOSAR Standards realisierten Steuergeräts umfasst die bushardwareunabhängige erste Kommunikationsschicht dann Application Layer, Runtime Environment (RTE) und Communication Services (auch inkl. bussystemabhängiger Anteile, wie z. B. CAN Transport Protokoll oder FlexRay Transport Protokoll), aber nicht die bushardwareabhängigen Treiberschichten, wie z. B. CAN Interface oder FlexRay Interface.

Auch die bushardwareabhängige zweite Kommunikationsschicht umfasst Funktionalitäten, die die Übermittlung von Daten in Senderichtung - also in Richtung auf den Bus - oder in Empfangsriclitung - also in Richtung auf die erste Kommunikationsschicht - oder die Übermittlung von Daten in beide Richtungen realisieren. Das bedeutet, dass die zweite Kommunikationsschicht aus der ersten Protokoll-Dateneinheit oder aus einer aus der ersten Protokoll-Dateneinheit abgeleiteten weiteren Protokoll-Dateneinheit zur Übertragung über den Bus eine bushardwareabhängige Businformation erzeugt - Senderichtung - und/oder dass die zweite Kommunikationsschicht zumindest aus einer bushardwareabhängigen Businformation die erste Protokoll-Dateneinheit oder eine weitere Protokoll-Dateneinheit, aus der die erste Protokoll-Dateneinheit ableitbar ist, erzeugt - Empfangsrichtung -. Neben der ersten Protokoll-Dateneinheit kann es demnach auch weitere Protokoll-Dateneinheiten geben, die entweder aus der ersten Protokoll-Dateneinheit abgeleitet sind, oder aus denen die erste Protokoll-Dateneinheit ableitbar ist. Dies trägt lediglich dem Umstand Rechnung, dass die zweite Kommunikationsschicht mehrere Sub-Kommunikationsschichten oder Protokollschichten umfassen kann, von denen jede ihre korrespondierende Protokoll-Dateneinheit erzeugt, so wie dies im Zusammenhang mit der ersten Protokoll-Dateneinheit erläutert worden ist. In Senderichtung werden jeder weiteren Protokoll-Dateneinheit üblicherweise weitere Verwaltungsinformationen hinzugefügt und in Empfangsrichtung werden in Sub-Kommunikationsschichten oder Protokollschichten die weiteren Protokoll-Dateneinheiten extrahiert, bis letztlich die erste Protokoll-Dateneinheit erhalten wird, aus der in der ersten Kommunikationsschicht letztlich die Information erhalten wird.

Beim Test von Steuergeräten und der Buskommunikation von Steuergeräten besteht ein Interesse darin, den Test möglichst realitätsnah durchzuführen, um ein möglichst aussagekräftiges Testergebnis zu erhalten. Beim Steuergerät kann diese Bedingung erfüllt werden, indem schlicht dasjenige Steuergerät in einer Testumgebung verwendet wird, das in jeder Hinsicht dem später zum Einsatz kommenden Seriensteuergerät entspricht, das also Serienhardware wie auch Seriensoftware aufweist.

Bei dem Test eines realen Steuergeräts werden andere Kommunikationspartner häufig im Rahmen einer Restbussimulation auf einem Hardware-in-the-Loop-Simulator (HIL-Simulator) nachgebildet, wobei nicht sämtliche Kommunikationspartner simuliert werden müssen, ein Teil der anderen Kommunikationspartner kann auch real vorliegen. Im Fall dieser jedenfalls auch vorhandenen Restbussimulation können Fehler im simulierten Restbusanteil verhältnismäßig einfach generiert werden, Fehler zwischen real vorhandenen Steuergeräten lassen sich jedoch nicht ohne weiteres einstreuen. Soll auch die Kommunikation zwischen realen Steuergeräten beeinflusst werden, wird dies häufig mit einem Fehlergateway realisiert. Bei einem Fehlergateway wird neben dem normalen, fehlerfrei arbeitenden Bus ein zweiter "Fehlerbus" zur Verfügung gestellt, der im Fehlerfall zwischen zwei realen Steuergeräten zum Tragen kommt. Das Fehlergateway vermittelt dann zwischen dem normalen Bus und dem Fehlerbus, wobei das Fehlergateway die zu beeinflussenden Daten im zu testenden Fehlerfall empfängt und dekodiert, bis eine solche Protokoll-Dateneinheit vorliegt, in die ein Fehler einzubringen ist, woraufhin die beeinflusste Nachricht wieder kodiert und über den Fehlerbus einem anderen Steuergerät zugeleitet wird. Es ist ohne weiteres ersichtlich, dass die Beeinflussung der Buskommunikation eines Steuergeräts über ein Fehlergateway ausgesprochen aufwendig ist. Darüber hinaus setzt die Restbussimulation mit realen Steuergeräten immer voraus, dass das Steuergerät auch in seiner Serienfassung oder zumindest als Hardware-Realisierung (sogenannte Vorserie) vorliegt, was den Test der Buskommunikation eines Steuergeräts zu einem frühen Zeitpunkt praktisch unmöglich macht. Dazu kommt, dass in dem Restbusmodell eines simulierten Steuergeräts auf einem HIL-Simulator nicht der Code implementiert ist, der später in den tatsächlichen Steuergeräten zum Einsatz kommt, so dass die beeinflusste und getestete Buskommunikation nicht der später tatsächlich realisierten Buskommunikation entspricht.

Genau hier setzt das sogenannte virtuelle Steuergeräte Testen an. Im Gegensatz zum Steuergerätemodell einer Restbussimulation, enthält der Code eines virtuellen Steuergeräts bereits Komponenten des Seriensteuergerätecodes, der später auf der Steuergeräte-Hardware eingesetzt werden soll.
Als virtuelles Steuergerät wird also Software bezeichnet, die in einem Simulationsszenario ein echtes Steuergerät emuliert. Das virtuelle Steuergerät umfasst dabei beispielsweise die Komponenten der Applikations-Software, das Runtime-Environment sowie von Teile der Basis-Software als Seriensteuergerätecode.

Ein virtuelles Steuergeräte-Modell wird beispielsweise auf einem Standard-PC in einer Offline-Simulation oder auf einem Echtzeit-Simulator getestet. Dabei sollen in der Simulation realitätsnahe Effekte wie das Kommunikationsverhalten untersucht werden.

Aufgabe der vorliegenden Erfindung ist es daher, ein Verfahren zur Beeinflussung der Buskommunikation eines Steuergeräts bereitzustellen, das einen möglichst realitätsnahen Test der Buskommunikation des Steuergeräts zulässt.

Die zuvor aufgezeigte und hergeleitete Aufgabe ist im Wesentlichen dadurch gekennzeichnet, dass wenigstens eine entweder zwischen der ersten Kommunikationsschicht und der zweiten Kommunikationsschicht oder innerhalb der zweiten Kommunikationsschicht realisierte Sende-Beeinflussungsschicht die erste Protokoll-Dateneinheit und/oder wenigstens eine von der ersten Protokoll-Dateneinheit abgeleitete weitere Protokoll-Dateneinheit beeinflusst und die beeinflusste erste Protokoll-Dateneinheit und/oder die beeinflusste weitere Protokoll-Dateneinheit zur weiteren Verarbeitung der zweiten Kommunikationsschicht zur Verfügung stellt und/oder dass wenigstens eine entweder zwischen der ersten Kommunikationsschicht und der zweiten Kommunikationsschicht oder innerhalb der zweiten Kommunikationsschicht realisierte Empfangs- Beeinflussungsschicht die weitere Protokoll-Dateneinheit oder die aus der von der weiteren Protokoll-Dateneinheit abgeleitete erste Protokoll-Dateneinheit beeinflusst und die erhaltene beeinflusste erste Protokoll-Dateneinheit und/oder die beeinflusste weitere Protokoll-Dateneinheit zur weiteren Verarbeitung der zweiten Kommunikationsschicht zur Verfügung stellt.

Ein wesentlicher Aspekt des erfindungsgemäßen Verfahrens besteht darin, das außerhalb der bushardwareunabhängigen ersten Kommunikationsschicht eine Sende-Beeinflussungsschicht - Senderichtung - und/oder eine Empfangs-Beeinflussungsschicht - Empfangsrichtung - vorgesehen ist, die praktisch in beliebiger Tiefe des Protokollstapels eine Beeinflussung der zu versendenden oder empfangenen Daten ermöglicht. Dadurch, dass die Beeinflussungsschichten jedenfalls außerhalb der bushardwareunabhängigen ersten Kommunikationsschicht vorgesehen sind, kann der der ersten Kommunikationsschicht zugrunde liegende Code des Steuergeräts unverändert auch bei einer Fehlereinstreuung durch die Beeinflussungsschichten getestet werden. Der Code der bushardwareunabhängigen ersten Kommunikationsschicht muss für die erfindungsgemäße Fehlereinstreuung durch die Beeinflussungsschichten in keinster Weise verändert werden, er muss demzufolge auch nicht neu generiert werden. Da die bushardwareunabhängige erste Kommunikationsschicht in realen Anwendungen üblicherweise eine Applikations-Schicht, eine Schicht zur Implementierung einer Laufzeitumgebung und eine bestimmte bushardwareunabhängige Kommunikationsdienste umfassende Sub-Kommunikationsschicht umfasst, werden mit dem erfindungsgemäßen Verfahren bei der Beeinflussung der Buskommunikation insbesondere auch die unveränderten bushardwareunabhängigen Kommunikationsdienste getestet, was gegenüber den aus dem Stand der Technik bekannten Verfahren einen erheblichen Vorteil darstellt.

Für das erfindungsgemäße Verfahren ist es nicht entscheidend, ob die Sende-Beeinflussungsschicht und/oder die Empfangs-Beeinflussungsschicht zwischen der bushardwareunabhängigen ersten Kommunikationsschicht und der bushardwareabhängigen zweiten Kommunikationsschicht realisiert ist, also praktisch außerhalb der ersten und der zweiten Kommunikationsschicht, oder ob die Empfangs- und/oder die Sende-Beeinflussungsschicht als Bestandteil der zweiten Kommunikationsschicht realisiert ist. Je nach Anwendungsfall und je nach gewünschtem Ort der Einflussnahme auf die Buskommunikation kann es auch gewünscht sein, eine oder beide Beeinflussungsschichten sowohl zwischen der ersten Kommunikationsschicht und der zweiten Kommunikationsschicht als auch innerhalb der zweiten Kommunikationsschicht zu realisieren.

In einer vorteilhaften Ausgestaltung des Verfahrens wird die erste Protokoll-Dateneinheit und/oder wenigstens eine von der ersten Protokoll-Dateneinheit abgeleitete weitere Protokoll-Dateneinheit durch die Sende-Beeinflussungsschicht beeinflusst, indem die erste Protokoll-Dateneinheit und/oder die weitere Protokoll-Dateneinheit dekodiert wird, die erhaltene dekodierte und zu beeinflussende Information beeinflusst wird und die beeinflusste Information wieder zu einer beeinflussten ersten Protokoll-Dateneinheit und/oder zu einer beeinflussten weiteren Protokoll-Dateneinheit kodiert wird. Vor allem wenn die zweite Kommunikationsschicht mehrere Sub-Kommunikationsschichten - auch Protokollschichten genannt - umfasst, kommen in der zweiten Kommunikationsschicht von der ersten Protokoll-Dateneinheit abgeleitete weitere Protokoll-Dateneinheiten vor, die in Richtung auf die busnahen Sub-Kommunikationsschichten jeweils mit zusätzlichen und protokollabhängigen Informationen ausgestattet sind.

Korrespondierend zu dem vorgenannten bevorzugten Ausführungsbeispiel zeichnet sich ein weiteres bevorzugtes Ausführungsbeispiel des Beeinflussungsverfahrens dadurch aus, dass die Empfangs-Beeinflussungsschicht die weitere Protokoll-Dateneinheit und/oder die von der weiteren Protokoll-Dateneinheit abgeleitete erste Protokoll-Dateneinheit beeinflusst, indem die weitere Protokoll-Dateneinheit und/oder die erste Protokoll-Dateneinheit dekodiert wird, die erhaltene dekodierte und zu beeinflussende Information beeinflusst wird und die beeinflusste Information wieder zu der beeinflussten ersten Protokoll-Dateneinheit und/oder zu der beeinflussten weiteren Protokoll-Dateneinheit kodiert wird. Genau wie schon bei der Sende-Beeinflussungsschicht erläutert, wird die erste Protokoll-Dateneinheit oder die weitere Protokoll-Dateneinheit soweit entpackt, bis die zu beeinflussenden Daten "freiliegen" und daher einer Beeinflussung zugänglich sind, woraufhin die beeinflussten Daten durch Kodierung wieder "verpackt" und dem Datenfluss der Buskommunikation wieder zur Verfügung gestellt werden. Durchzuführende Manipulationen bzw. Fehlereinstreuungen betreffen beispielsweise das Ausfallenlassen und/oder eine Verzögerung der Übertragung von Protokoll-Dateneinheiten, das Ausfallenlassen oder Verzögern einer Empfangsbestätigung, die Beeinflussung von Rohdaten, Update-Bits, Checksummen, Countern und Signalen/Daten.

Wie zuvor schon angedeutet worden ist, wird bei einer weiteren bevorzugten Ausgestaltung des Beeinflussungsverfahrens aus der ersten Protokoll-Dateneinheit eine Mehrzahl von Protokoll-Dateneinheiten für eine Mehrzahl von Protokollschichten erzeugt und/oder wird in einer Mehrzahl von Protokollschichten aus einer Mehrzahl von Protokoll-Dateneinheiten die erste Protokoll-Dateneinheit abgeleitet. Dabei nimmt zwischen einer Mehrzahl von Protokollschichten eine Mehrzahl von Sende- und/oder Empfangs-Beeinflussungsschichten eine Mehrzahl von Beeinflussungen einer Mehrzahl von Protokoll-Dateneinheiten vor. Wenn dies innerhalb der zweiten Kommunikationsschicht erfolgt, dann sind die genannten Protokollschichten praktisch Sub-Kommunikationsschichten innerhalb der zweiten Kommunikationsschicht. Beispiele für Protokollschichten innerhalb der zweiten Kommunikationsschicht, also für Sub-Kommunikationsschichten innerhalb der zweiten Kommunikationsschicht, sind eine Hardware-Abstraktionsschicht und eine Hardware-Treiberschicht, wobei die Sende-Beeinflussungsschicht und/oder die Empfangs-Beeinflussungsschicht beispielsweise zwischen der Hardware-Abstraktionsschicht und der Hardware-Treiberschicht realisiert ist. Zusätzliche Beeinflussungsschichten können darüber hinaus oder alternativ realisiert sein.

Das erfindungsgemäße Verfahren zur Beeinflussung der Buskommunikation eines Steuergeräts lässt sich zwanglos in Zusammenhang mit bereits existierenden Standards einsetzen. Ein bevorzugter Anwendungsfall besteht darin, dass die bushardwareunabhängige erste Kommunikationsschicht gemäß der Automotive Open System Architecture (AUTOSAR) umgesetzt ist, die darauf ausgelegt ist eine Trennung zwischen Applikation und der zugrunde liegenden Hardware vorzunehmen.

Das erfindungsgemäße Verfahren hat den Vorteil, dass mit ihm praktisch beliebige Testszenarien unter Beibehaltung der beschriebenen Vorteile realisiert werden können. Das Verfahren ist beispielsweise problemlos mittels einer Softwareimplementierung auf einem Steuergerät durchführbar, insbesondere auf einem Serien-Steuergerät. Bei einer solchen Softwareimplementierung kann der der ersten bushardwareunabhängigen Kommunikationsschicht zugrunde liegende Code unberührt bleiben, das Serien-Steuergerät muss nur insoweit instrumentiert werden, als dass die Sende-Beeinflussungsschicht und/oder die Empfangs-Beeinflussungsschicht zwischen der ersten Kommunikationsschicht und der zweiten Kommunikationsschicht und/oder innerhalb der zweiten Kommunikationsschicht vorgesehen werden müssen bzw. muss. Insbesondere innerhalb der ersten Kommunikationsschicht vorgesehene Kommunikationsdienste werden unabhängig von der Sende-Beeinflussungsschicht und/oder der Empfangs-Beeinflussungsschicht getestet.

Zur Durchführung des erfindungsgemäßen Beeinflussungsverfahrens bedarf es eines Serien-Steuergeräts jedoch nicht. In einem bevorzugten Anwendungsfall wird das erfindungsgemäße Beeinflussungsverfahren mittels einer Softwareimplementierung auf einem emulierten Steuergerät durchgeführt, insbesondere beispielsweise auf einem mittels eines Hardware-in-the-Loop-Simulators in Echtzeit emulierten Steuergeräts. Besonders hervorzuheben ist auch hier, dass der der ersten bushardwareunabhängigen Kommunikationsschicht zugrunde liegende Code, so wie er später auf der endgültigen Zielhardware zur Anwendung kommt, auch auf einem emulierten Steuergerät zur Anwendung kommt und dort praktisch losgelöst von den implementierten Beeinflussungsschichten getestet wird.

Das erfindungsgemäße Verfahren ist ohne weiteres auch gänzlich "offline" durchführbar, also mittels einer Softwareimplementierung auf einem Zielrechner, der insbesondere nicht-echtzeitfähig ist. Auch hier ist wiederum der Code der ersten Kommunikationsschicht mit den darin enthaltenen Kommunikationsdiensten ohne weiteres so verwendbar, wie er später auf der finalen Hardware verwendet wird.

Eine weitere vorteilhafte Ausgestaltung des Verfahrens zeichnet sich dadurch aus, dass die erste Kommunikationsschicht und/oder die zweite Kommunikationsschicht und/oder die Sende-Beeinflussungsschicht und/oder die Empfangs-Beeinflussungsschicht auf verschiedenen Recheneinheiten ausgeführt werden/wird, insbesondere auf verschiedenen Prozessoren oder auf verschiedenen Kernen eines Prozessors.

Im Einzelnen gibt es nun eine Vielzahl von Möglichkeiten, das erfindungsgemäße Verfahren zur Beeinflussung der Buskommunikation eines Steuergeräts auszugestalten und weiterzubilden. Dazu wird verwiesen sowohl auf die dem Patentanspruch 1 nachgeordneten Patentansprüche, als auch auf die nachfolgende Beschreibung von bevorzugten Ausführungsbeispielen in Verbindung mit der Zeichnung. In der Zeichnung zeigen:
- Fig. 1: schematisch die Funktionsweise der Buskommunikation eines Steuergeräts gemäß dem Stand der Technik,
- Fig. 2: eine Sende-Beeinflussungsschicht und eine Empfangs-Beeinflussungsschicht innerhalb einer zweiten Kommunikationsschicht,
- Fig. 3: eine Sende-Beeinflussungsschicht und eine Empfangs-Beeinflussungsschicht zwischen einer bushardwareunabhängigen ersten Kommunikationsschicht und einer bushardwareabhängigen zweiten Kommunikationsschicht,
- Fig. 4: schematisch den Aufbau der Sende-Beeinflussungsschicht und der Empfangs-Beeinflussungsschicht,
- Fig. 5: eine Detailansicht einer möglichen Funktionsweise der Sende-Beeinflussungsschicht und der Empfangs-Beeinflussungsschicht,
- Fig. 6: die bushardwareabhängige zweite Kommunikationsschicht mit einer Mehrzahl von Protokollschichten als Sub-Kommunikationsschichten,
- Fig. 7: die bushardwareabhängige zweite Kommunikationsschicht mit einer Mehrzahl an Sende- und Empfangsbeeinflussungsschichten,
- Fig. 8: den Einsatz des Beeinflussungsverfahrens mit Serieristeuergeräten im Feld,
- Fig. 9: den Einsatz des Beeinflussungsverfahrens bei einem Steuergerät mit Restbussimulation und
- Fig. 10: den Einsatz des Beeinflussungsverfahrens "offline" auf einem nicht-echtzeitfähigen PC.

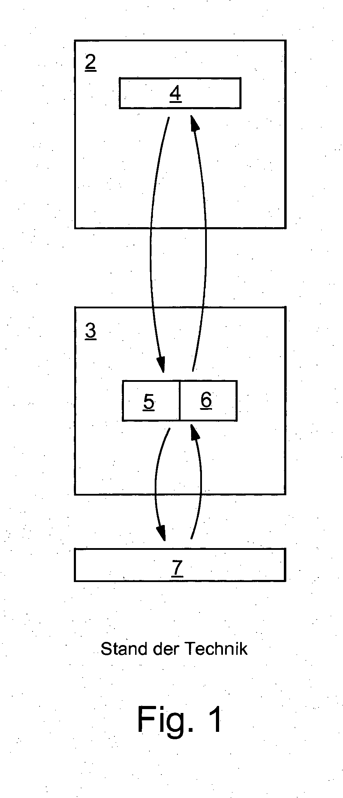

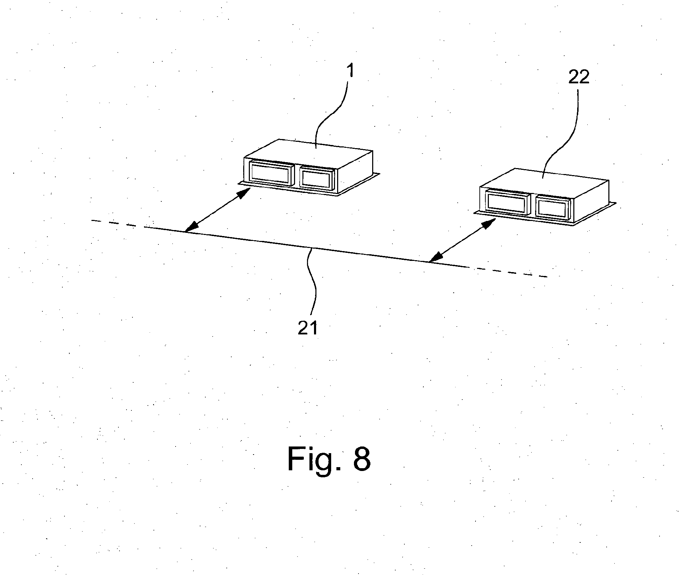

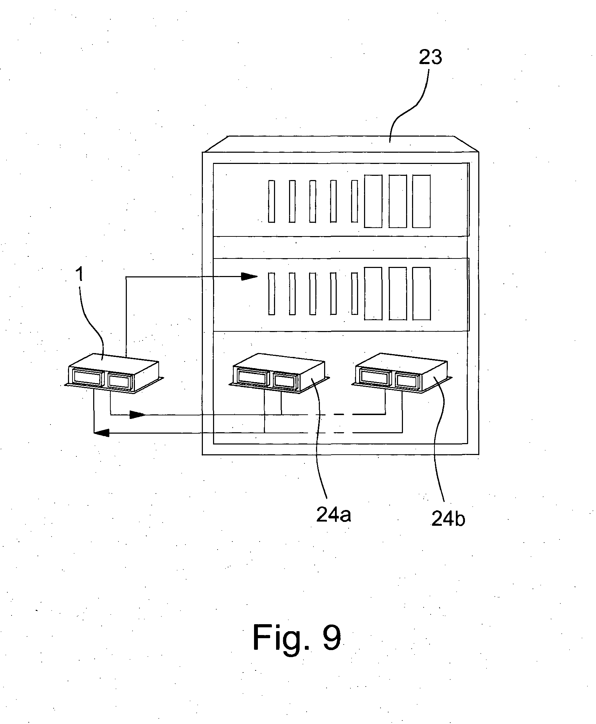

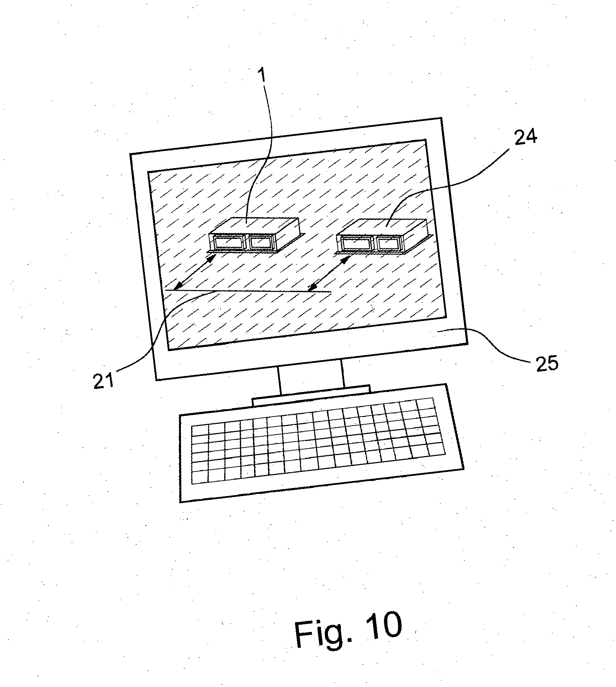

In den Fig. 1 bis 10 sind verschiedene Aspekte eines Verfahrens zur Beeinflussung der Buskommunikation eines Steuergeräts 1 dargestellt, wobei ein reales Steuergerät 1 lediglich in den Fig. 8 und 9 explizit dargestellt ist, Fig. 10 zeigt ein simuliertes Steuergerät 1.

In Fig. 1 ist der Aufbau einer aus dem Stand der Technik bekannten Buskommunikation schematisch dargestellt, umfassend eine bushardwareunabhängige erste Kommunikationsschicht 2 und eine bushardwareabhängige zweite Kommunikationsschicht 3. Die bushardwareunabhängige erste Kommunikationsschicht 2 kodiert eine Information 4 in eine erste Protokoll-Dateneinheit 5 und überträgt diese an die bushardwareabhängige zweite Kommunikationsschicht 3. Umgekehrt erhält auf der "Empfängerseite" die erste Kommunikationsschicht 2 von der zweiten Kommunikationsschicht 3 die erste Protokoll-Dateneinheit 5 und dekodiert aus der ersten Protokoll-Dateneinheit 5 wiederum die Information 4. Die Information 4 ist typischerweise eine anwendungsspezifische Information, beispielsweise eine Prozessgröße wie Druck oder Temperatur, ein Stellwert für ein von dem Steuergerät umfasstes oder an das Steuergerät angeschlossenes Stellglied oder vielleicht auch nur eine darzustellende Information. Die Information 4 ist im Regelfall bushardwareunabhängig.

In Senderichtung wird von der zweiten Kommunikationsschicht 3 aus der ersten Protokoll-Dateneinheit 5 oder aus einer aus der ersten Protokoll-Dateneinheit 5 abgeleiteten weiteren Protokoll-Dateneinheit 6 zur späteren Übertragung über den Bus eine bushardwareabhängige Businformation 7 erzeugt. In Empfangsrichtung bedeutet dies, dass die zweite Kommunikationsschicht 3 aus der bushardwareabhängigen Businformation 7 die erste Protokoll-Dateneinheit 5 oder eine weitere Protokoll-Dateneinheit 6, aus der die erste Protokoll-Dateneinheit 5 ableitbar ist, erzeugt. Die erste Kominunikationsschicht 2 und die zweite Kommunikationsschicht 3 können in weitere Sub-Kommunikationsschichten untergliedert sein, können also ihrerseits mehrere Protokollschichten enthalten. In Senderichtung, also von der ersten Kommunikationsschicht 2 über die zweite Kommunikationsschicht 3 hin zu der Businformation 7, wird die Information 4 beim Durchlaufen des Protokollstapels in eine zunehmende Anzahl von Protokollinformationen eingekleidet. In Empfangsrichtung, also von der Businformation 7 über die zweite Kommunikationsschicht 3 hin zur ersten Kommunikationsschicht 2, wird die Businformation 7 beim umgekehrten Durchlaufen des Protokollstapels immer weiter von Protokollinformationen entkleidet, bis letztlich nur noch die Information 4 vorliegt.

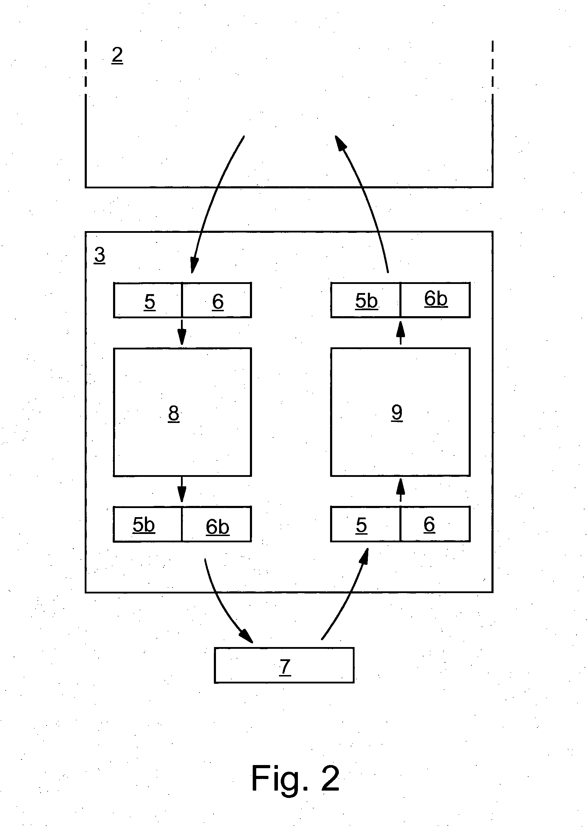

In Fig. 2 ist die Funktionsweise des erfindungsgemäßen Verfahrens zur Beeinflussung der Buskommunikation des Steuergeräts 1 dargestellt. In der zweiten Kommunikationsschicht 3 ist eine Sende-Beeinflussungsschicht 8 realisiert, die die erste Protokoll-Dateneinheit 5 und/oder eine von der ersten Protokoll-Dateneinheit 5 abgeleitete weitere Protokoll-Dateneinheit 6 beeinflusst und die beeinflusste erste Protokoll-Dateneinheit 5b und/oder die beeinflusste weitere Protokoll-Dateneinheit 6b zur weiteren Verarbeitung der zweiten Kommunikationsschicht 3 zur Verfügung stellt. Die Sende-Beeinflussungsschicht 8 dient hier beispielsweise zur bewussten Fehlereinstreuung und daher zum Test der Buskommunikation. Bemerkenswert ist hier, dass die bushardwareunabhängige erste Kommunikationsschicht 2 durch das erfindungsgemäße Verfahren zur Beeinflussung der Buskommunikation nicht verändert oder angepasst zu werden braucht, insbesondere können alle von der bushardwareunabhängigen ersten Kommunikationsschicht 2 umfassten Protokollschichten, insbesondere auch hier angesiedelte Kommunikationsdienste, so verwendet werden, wie sie praktisch im Seriensteuergerät zum Einsatz kommen.

Ferner ist in Fig. 2 zu erkennen, dass innerhalb der zweiten Kommunikationsschicht 3 auch eine Empfangs-Beeinflussungsschicht 9 realisiert ist, die die weitere Protokoll-Dateneinheit 6 oder die aus der von der weiteren Protokoll-Dateneinheit 6 abgeleitete erste Protokoll-Dateneinheit 5 beeinflusst und die erhaltene beeinflusste erste Protokoll-Dateneinheit 5b und/oder die beeinflusste weitere Protokoll-Dateneinheit 6b zur weiteren Verarbeitung der zweiten Kommunikationsschicht 3 zur Verfügung stellt (Empfangsrichtung).

Selbstverständlich müssen nicht alle Protokoll-Dateneinheiten einer Beeinflussung durch die Sende-Beeinflussungsschicht 8 bzw. durch die Empfangs-Beeinflussungsschicht 9 unterzogen werden, bedarfsweise können Protokoll-Dateneinheiten auch an den Beeinflussungsschichten vorbeigeleitet werden, was hier im Einzelnen nicht dargestellt ist.

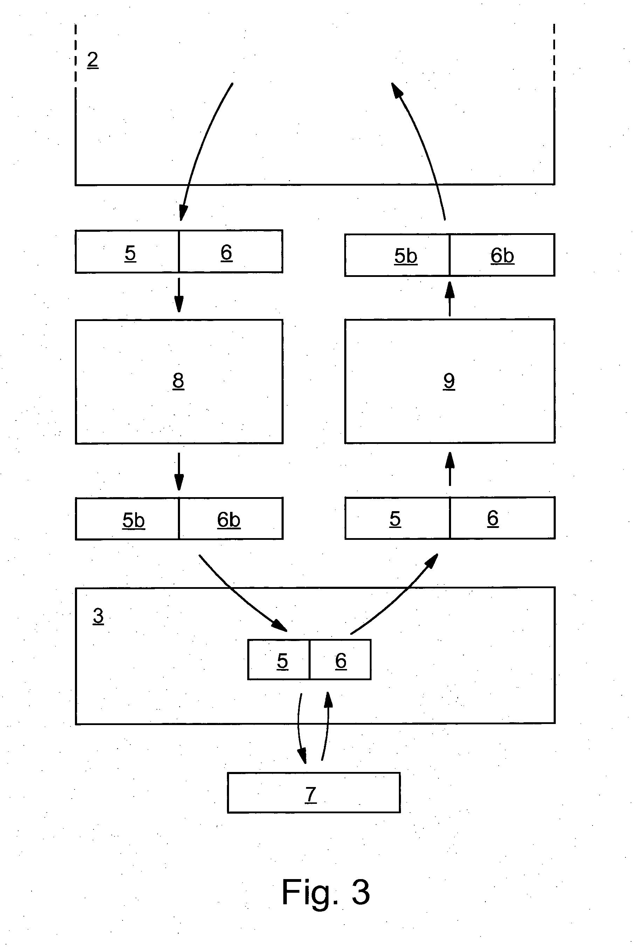

In Fig. 3 ist ebenfalls das erfindungsgemäße Verfahren zur Beeinflussung der Buskommunikation eines Steuergeräts dargestellt, wobei im Unterschied zu dem Ausführungsbeispiel gemäß Fig. 2 sowohl die Sende-Beeinflussungsschicht 8 als auch die Empfangs-Beeinflussungsschicht 9 zwischen der ersten Kommunikationsschicht 2 und der zweiten Kommunikationsschicht 3 realisiert sind. Ergebnis jeder Beeinflussungsschicht 8, 9 ist jeweils, dass aus der ersten Protokoll-Dateneinheit 5 bzw. aus der von der ersten Protokoll-Dateneinheit 5 abgeleiteten weiteren Protokoll-Dateneinheit 6 durch entsprechende Beeinflussung die beeinflusste erste Protokoll-Dateneinheit 5b bzw. die beeinflusste weitere Protokoll-Dateneinheit 6b erzeugt wird. In Senderichtung wirken die beeinflusste erste Protokoll-Dateneinheit 5b bzw. die beeinflusste weitere Protokoll-Dateneinheit 6b für die zweite Kommunikationsschicht 3 wie eine erste Protokoll-Dateneinheit 5 bzw. wie eine davon abgeleitete weitere Protokoll-Dateneinheit 6, dies ist für die zweite Kommunikationsschicht 3 nicht unterscheidbar.

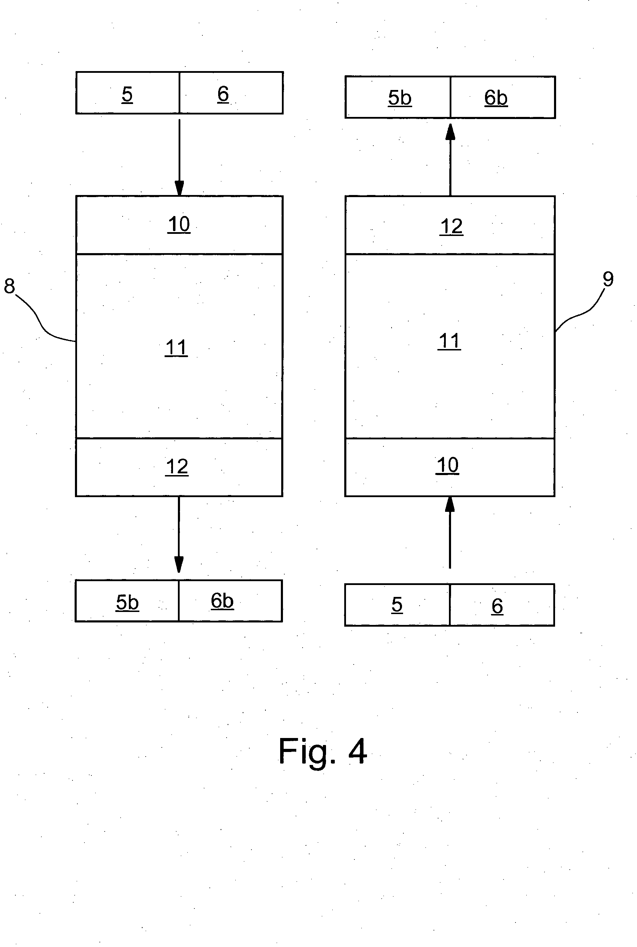

Fig. 4 zeigt den genaueren Vorgang bei der Beeinflussung der Buskommunikation, einerseits für den Sendepfad und die Sende-Beeinflussungsschicht 8 (links), andererseits für den Empfangspfad mittels der Empfangs-Beeinflussungsschicht 9 (rechts). Die Sende-Beeinflussungsschicht 8 beeinflusst die erste Protokoll-Dateneinheit 5 bzw. eine von der ersten Protokoll-Dateneinheit 5 abgeleitete weiterer Protokoll-Dateneinheit 6, indem die erste Protokoll-Dateneinheit 5 bzw. die weitere Protokoll-Dateneinheit 6 dekodiert wird 10, die erhaltene dekodierte und zu beeinflussende Information beeinflusst wird 11 und die beeinflusste Information wieder zu einer beeinflussten ersten Protokoll-Dateneinheit 5b bzw. zu einer beeinflussten weiteren Protokoll-Dateneinheit 6b kodiert wird 12. Sinngemäß geschieht die Beeinflussung auch in Empfangsrichtung, die Empfangs-Beeinflussungsschicht 9 beeinflusst dort die weitere Protokoll-Dateneinheit 6 bzw. die von der weiteren Protokoll-Dateneinheit 6 abgeleitete erste Protokoll-Dateneinheit 5, indem die weitere Protokoll-Dateneinheit 6 bzw. die erste Protokoll-Dateneinheit 5 dekodiert wird 10, die erhaltene dekodierte und zu beeinflussende Information beeinflusst wird 11 und die beeinflusste Information wieder zu der beeinflussten ersten Protokoll-Dateneinheit 5b bzw. zu der beeinflussten weiteren Protokoll-Dateneinheit 6b kodiert wird 12. Selbstverständlich können die hier für den Sendepfad und den Empfangspfad beschriebenen Schritte der Dekodierung 10, der Beeinflussung 11 und der Kodierung 12 voneinander abweichen, auch wenn sie hier mit gleichen Bezugszeichen versehen sind, selbstverständlich kann auch nur im Sendepfad eine Beeinflussung vorgenommen werden oder auch nur im Empfangspfad. Wie zuvor erwähnt, können Protokoll-Dateneinheiten auch selektiv an den Beeinflussungsschichten vorbeigeleitet werden.

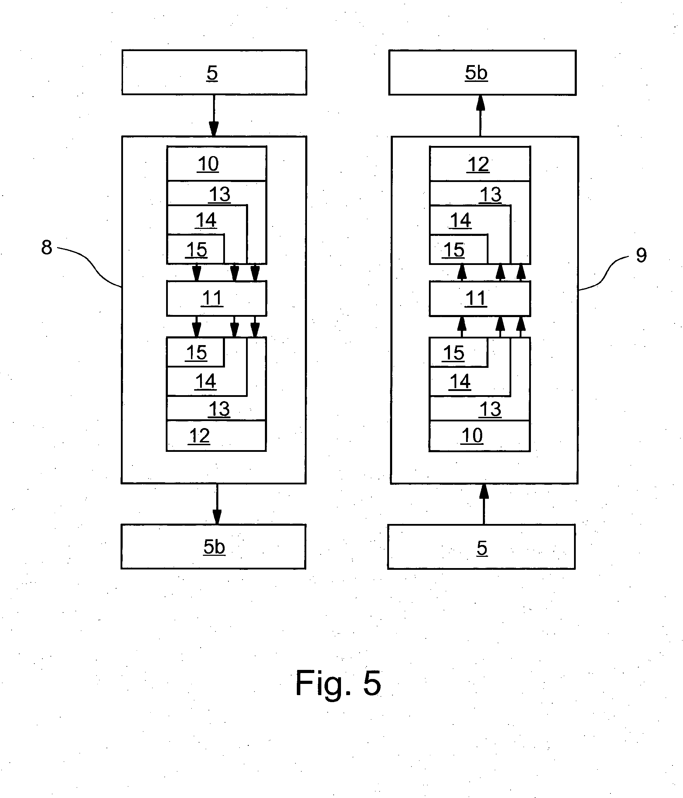

Fig. 5 verdeutlicht die Funktionsweise der zuvor anhand von Fig. 4 erläuterten Sende-Beeinflussungsschicht 8 und der Empfangs-Beeinflussungsschicht 9. In Fig. 5 ist in sehr kompakter Weise dargestellt, dass die zu beeinflussende Information in unterschiedlicher Tiefe des Protokolls stattfinden kann und dass die Dekodierung 10 in Abhängigkeit davon, in welcher Tiefe des Protokollstapels eine Beeinflussung vorzunehmen ist, auch sehr unterschiedlich weitreichend sein kann. In dem in Fig. 5 dargestellten Ausführungsbeispiel ist exemplarisch dargestellt, dass die Dekodierung 10 entweder bis auf eine Netzwerk-Protokollschicht 13, auf eine Interaktions-Protokollschicht 14 oder sogar bis auf eine Signalebene 15 reicht, wobei die Beeinflussung 11 dann auf der jeweiligen Protokollschicht geschieht. Umgekehrt muss die Kodierung 12 dann wieder durch sämtliche Protokollschichten gehen, also von der Signalebene 15 über die Interaktions-Protokollschicht 14 bis hin zur Netzwerk-Protokollschicht 13. Korrespondierendes gilt jeweils für die Sende-Beeinflussungsschicht 8 wie auch die Empfangs-Beeinflussungsschicht 9. Wenn eine Beeinflussung jedoch nur auf der Netzwerk-Protokollschicht 13 erfolgen soll, muss die Dekodierung 10 nicht in den Protokollschichten 14 und 15 erfolgen, an die Dekodierung 10 der Netzwerk-Protokollschicht 13 schließt sich direkt die Beeinflussung 11 und die darauf folgende Kodierung 12 in der Netzwerk-Protokollschicht 13 an. In jeder der Protokollschichten liegt dann eine für die jeweilige Protokollschicht eigene Protokoll-Dateneinheit vor, die Gegenstand einer Beeinflussung 11 sein kann.

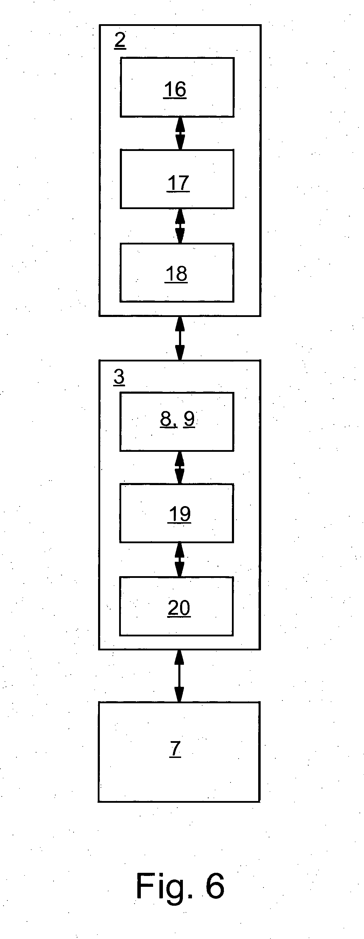

Anhand Fig. 6 ist der typische Aufbau eines einer zu beeinflussenden Buskommunikation zugrunde liegenden Protokollstapels dargestellt. In dem Beispiel ist die Software-Architektur an den modularen und offenen Aufbau gemäß dem AUTOSAR-Standard angelehnt. Die bushardwareunabhängige erste Kommunikationsschicht 2 umfasst dabei die Anwendungs-Protokollschicht 16, die Laufzeitumgebung (Run Time Environment) 17 und bushardwareunabhängige Kommunikationsdienste 18. Die bushardwareabhängige Kommunikationsschicht 3 umfasst hingegen eine Hardwareabstraktions-Protokollschicht 19 und eine Treiber-Protokollschicht 20. Innerhalb der zweiten Kommunikationsschicht 3 ist den Sub-Kommunikationsschichten 19 und 20 eine kombinierte Sende- und Empfangs-Beeinflussungsschicht 8, 9 vorgelagert. Die Sende- und Empfangs-Beeinflussungsschichten 8, 9 erfordern in keiner Weise eine Abänderung oder Instrumentierung der bushardwareunabhängigen ersten Kommunikationsschicht 2, so dass das dargestellte Verfahren zur Beeinflussung der Buskommunikation eines Steuergeräts es ermöglicht, bei der Simulation und dem Test der Steuergerätekommunikation den dem Steuergerät eigenen Kommunikations-Code einzusetzen, der in dem dargestellten Beispiel in der Protokollschicht 18 mit den Kommunikationsdiensten enthalten ist. Wie auch in den Fig. 1 bis 3 dargestellt, wird die bushardwareabhängige Businformation 7 von der bushardwareabhängigen zweiten Kommunikationsschicht 3 je nach Kommunikationsrichtung gesendet oder empfangen.

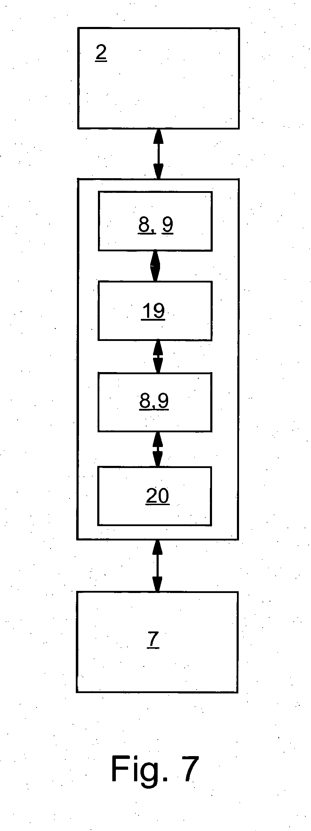

Das Ausführungsbeispiel gemäß Fig. 7 ist ähnlich dem Ausführungsbeispiel gemäß Fig. 6, mit dem Unterschied, dass neben der ersten Sende- und Empfangs-Beeinflussungsschicht 8, 9 nunmehr auch eine weitere, zweite Sende- und Empfangs-Beeinflussungsschicht 8, 9 vorgesehen ist, nämlich zwischen den Protokollschichten 19 und 20, wobei es sich bei der Protokollschicht 19 ebenfalls um eine Hardware-Abstraktionsschicht und bei der Protokollschicht 20 um eine Hardware-Treiberschicht handelt.

Fig. 8 zeigt den Anwendungsfall, dass das Verfahren zur Beeinflussung der Buskommunikation eines Steuergeräts 1 auf einem Seriensteuergerät 1 durchgeführt wird, wobei das Serien-Steuergerät 1 über einen Bus 21 mit weiteren an dem Bus 21 angeschlossenen Steuergeräten und Peripheriegeräten verbunden ist, von denen nur ein weiteres Steuergerät 22 dargestellt ist. In dem Steuergerät 1 ist für die Realisierung der Buskommunikation eine erste bushardwareunabhängige Kommunikationsschicht und eine bushardwareabhängige zweite Kommunikationsschicht realisiert, wobei zur Beeinflussung der Buskommunikation darüber hinaus zwischen den beiden Kommunikationsschichten auch eine Sende- und Empfangs-Beeinflussungsschicht realisiert ist, die der gezielten Fehlereinstreuung und damit dem Test des Steuergeräts 1 und des gesamten Netzwerks dient.

Fig. 9 zeigt den Anwendungsfall, dass das Verfahren zur Beeinflussung der Buskommunikation auf einem Seriensteuergerät 1 implementiert ist, wobei das Steuergerät 1 an einen Hardware-in-the-Loop-Simulator 23 angeschlossen ist, der über eine entsprechende Busschnittstelle verfügt und in dem im Rahmen einer Restbussimulation die weiteren Teilnehmer 24a, 24b des Busnetzwerkes simuliert werden. Ggf. sind zusätzlich zu dem Seriensteuergerät 1 und zu den durch den Hardware-in-the-Loop-Simulator 23 simulierten Steuergeräten weitere Seriensteuergeräte an den Bus angeschlossen, was hier im Einzelnen nicht dargestellt ist.

In einem weiteren - hier aber im Einzelnen nicht dargestellten Anwendungsfall - wird auch das Steuergerät, auf dem das Verfahren zur Beeinflussung der Buskommunikation implementiert ist, mit einer echtzeitfähigen Hardware simuliert, das Verfahren wird also auf einem virtuellen Steuergerät in Echtzeit betrieben. Wesentlich ist auch hier, dass obwohl in dem letztgenannten Anwendungsbeispiel keine Steuergeräte-Hardware vorhanden ist, trotzdem die bushardwareunabhängige erste Kommunikationsschicht so verwendet werden kann, wie sie später auf einem Serien-Steuergerät verwendet wird, insbesondere können so auch exakt die Kommunikationsdienste erprobt und getestet werden, die Bestandteil der bushardwareunabhängigen ersten Kommunikationsschicht sind.

In Fig. 10 ist schließlich der "offline"-Anwendungsfall dargestellt, bei dem das zuvor beschriebene Verfahren zur Beeinflussung der Buskommunikation auf einem nicht-echtzeitfähigen PC 25 betrieben wird. Auch hier ist das Steuergerät 1, auf dem das Verfahren durchgeführt wird, simuliert, genauso wie die Busverbindung 21 zu weiteren Teilnehmern der Kommunikation, von denen nur das virtuelle Steuergerät 24 dargestellt ist.

## Patentansprüche

1. Verfahren zur Beeinflussung der Buskommunikation eines Steuergeräts (1), wobei die Buskommunikation wenigstens eine bushardwareunabhängige erste Kommunikationsschicht (2) und wenigstens eine bushardwareabhängige zweite Kommunikationsschicht (3) umfasst, wobei die erste Kommunikationsschicht (2) wenigstens eine Information (4) in eine erste Protokoll-Dateneinheit (5) kodiert und an die zweite Kommunikationsschicht (3) überträgt und/oder die erste Kommunikationsschicht (2) von der zweiten Kommunikationsschicht (3) die erste Protokoll-Dateneinheit (5) erhält und aus der ersten Protokoll-Dateneinheit (5) die erste Information (4) dekodiert, und wobei die zweite Kommunikationsschicht (3) aus der ersten Protokoll-Dateneinheit (5) oder aus einer aus der ersten Protokoll-Dateneinheit (5) abgeleiteten weiteren Protokoll-Dateneinheit (6) zur Übertragung über den Bus eine bushardwareabhängige Businformation (7) erzeugt und/oder die zweite Kommunikationsschicht (3) zumindest aus einer bushardwareabhängigen Businformation (7) die erste Protokoll-Dateneinheit (5) oder eine weitere Protokoll-Dateneinheit (6), aus der die erste Protokoll-Dateneinheit (5) ableitbar ist, erzeugt, wobei
wenigstens eine entweder zwischen der ersten Kommunikationsschicht (2) und der zweiten Kommunikationsschicht (3) oder innerhalb der zweiten Kommunikationsschicht (3) realisierte Sende-Beeinflussungsschicht (8) die erste Protokoll-Dateneinheit (5) und/oder wenigstens eine von der ersten Protokoll-Dateneinheit (5) abgeleitete weitere Protokoll-Dateneinheit (6) beeinflusst und die beeinflusste erste Protokoll-Dateneinheit (5b) und/oder die beeinflusste weitere Protokoll-Dateneinheit (6b) zur weiteren Verarbeitung der zweiten Kommunikationsschicht (3) zur Verfügung stellt und/oder
wenigstens eine entweder zwischen der ersten Kommunikationsschicht (2) und der zweiten Kommunikationsschicht (3) oder innerhalb der zweiten Kommunikationsschicht (3) realisierte Empfangs-Beeinflussungsschicht (9) die weitere Protokoll-Dateneinheit (6) oder die aus der von der weiteren Protokoll-Dateneinheit (6) abgeleitete erste Protokoll-Dateneinheit (5) beeinflusst und die erhaltene beeinflusste erste Protokoll-Dateneinheit (5b) und/oder die beeinflusste weitere Protokoll-Dateneinheit (6b) zur weiteren Verarbeitung der zweiten Kommunikationsschicht (3) zur Verfügung stellt.

2. Verfahren nach Anspruch 1, **dadurch gekennzeichnet, dass** die Sende-Beeinflussungsschicht (8) die erste Protokoll-Dateneinheit (5) und/oder wenigstens eine von der ersten Protokoll-Dateneinheit (5) abgeleitete weitere Protokoll-Dateneinheit (6) beeinflusst, indem die erste Protokoll-Dateneinheit (5) und/oder die weitere Protokoll-Dateneinheit (6) dekodiert (10) wird, die erhaltene dekodierte und zu beeinflussende Information beeinflusst (11) wird und die beeinflusste Information wieder zu einer beeinflussten ersten Protokoll-Dateneinlieit (5b) und/oder zu einer beeinflussten weiteren Protokoll-Dateneinheit (6b) kodiert (12) wird.

3. Verfahren nach Anspruch 1 oder 2, **dadurch gekennzeichnet, dass** die Empfangs-Beeinflussungsschicht (9) die weitere Protokoll-Dateneinheit (6) und/oder die von der weiteren Protokoll-Dateneinheit (6) abgeleitete erste Protokoll-Dateneinheit (5) beeinflusst, indem die weitere Protokoll-Dateneinheit (6) und/oder die ersten Protokoll-Dateneinheit (5) dekodiert (10) wird, die erhaltene dekodierte und zu beeinflussende Information beeinflusst (11) wird und die beeinflusste Information wieder zu der beeinflussten ersten Protokoll-Dateneinheit (5b) und/oder zu der beeinflussten weiteren Protokoll-Dateneinheit (6b) kodiert (12) wird.

4. Verfahren nach einem der Ansprüche 1 bis 3, **dadurch gekennzeichnet, dass** aus der ersten Protokoll-Dateneinheit (5) eine Mehrzahl von Protokoll-Dateneinheiten für eine Mehrzahl von Protokollschichten (19, 20) erzeugt wird und/oder in einer Mehrzahl von Protokollschichten (19, 20) aus einer Mehrzahl von Protokoll-Dateneinheiten die erste Protokoll-Dateneinheit (5) abgeleitet wird, wobei zwischen einer Mehrzahl von Protokollschichten (19, 20) eine Mehrzahl von Sende-Beeinflussungsschichten (8) und/oder Empfangs-Beeinflussungsschichten (9) eine Mehrzahl von Beeinflussungen einer Mehrzahl von Protokoll-Dateneinheiten vornimmt.

5. Verfahren nach Anspruch 1 bis 4, **dadurch gekennzeichnet, dass** in der zweiten Kommunikationsschicht (3) als Protokollschichten (19, 20) eine Hardware-Abstraktionsschicht und eine Treiberschicht realisiert sind.

6. Verfahren nach Anspruch 5, **dadurch gekennzeichnet, dass** die Sende-Beeinflussungsschicht (8) und/oder die Empfangs-Beeinflussungsschicht (9) in der zweiten Kommunikationsschicht (3) zwischen der Hardware-Abstraktionsschicht und der Hardware-Treiberschicht (20) realisiert ist.

7. Verfahren nach einem der Ansprüche 1 bis 6, **dadurch gekennzeichnet, dass** die erste Kommunikationsschicht (2) gemäß der Automotive Open System Architecture (AUTOSAR) umgesetzt ist.

8. Verfahren nach einem der Ansprüche 1 bis 7, **dadurch gekennzeichnet, dass** das Verfahren mittels einer Softwareimplementierung auf einem Steuergerät (1) durchgeführt wird, insbesondere auf einem Serien-Steuergerät.

9. Verfahren nach einem der Ansprüche 1 bis 7, **dadurch gekennzeichnet, dass** das Verfahren mittels einer Softwareimplementierung auf einem emülierten Steuergerät (1) durchgeführt wird, insbesondere wobei das Steuergerät (1) auf einem Hardware-in-the-Loop Simulator (23) in Echtzeit emuliert wird.

10. Verfahren nach einem der Ansprüche 1 bis 7, **dadurch gekennzeichnet, dass** das Verfahren mittels einer Softwareimplementierung auf einem Zielrechner (3) durchgeführt wird, insbesondere auf einem nicht-echtzeitfähigen Zielrechner (25).

11. Verfahren nach einem der Ansprüche 1 bis 10, **dadurch gekennzeichnet, dass** die erste Kommunikationsschicht (2) und/oder die zweite Kommunikationsschicht (3) und/oder die Sende-Beeinflussungsschicht (8) und/oder die Empfangs-Beeinflussungsschicht (9) auf verschiedenen Recheneinheiten ausgeführt werden/wird, insbesondere auf verschiedenen Prozessoren oder auf verschiedenen Kernen eines Prozessors.

## Claims

1. A method for influencing the bus communications of a controller (1), the bus communications comprising at least one first communication layer (2) independent of the bus hardware and at least one second communication layer (3) dependent on the bus hardware, the first communication layer (2) encoding at least one item of information (4) in a first protocol data unit (5) and transferring the same to the second communication layer (3) and/or the first communication layer (2) receiving the first protocol data unit (5) from the second communication layer (3) and decoding the first item of information (4) from the first protocol data unit (5), and the second communication layer (3) generating a bus information item (7) dependent on the bus hardware from the first protocol data unit (5) or from a further protocol data unit (6) derived from the first protocol data unit (5) for transferring via the bus and/or the second communication layer (3) generating from at least one bus information item (7) dependent on the bus hardware the first protocol data unit (5) or a further protocol data unit (6) from which the first protocol data unit (5) can be derived,
wherein at least one transmission influencing layer (8) implemented either between the first communication layer (2) and the second communication layer (3) or within the second communication layer (3) influences the first protocol data unit (5) and/or at least one further protocol data unit (6) derived from the first protocol data unit (5), and makes the influenced first protocol data unit (5b) and/or the influenced further protocol data unit (6b) available to the second communication layer (3) for further processing, and/or
at least one reception influencing layer (9) implemented either between the first communication layer (2) and the second communication layer (3) or within the second communication layer (3) influences the further protocol data unit (6) or the first protocol data unit (5) derived from the further protocol data unit (6) and makes the obtained influenced first protocol data unit (5b) and/or the influenced further protocol data unit (6b) available to the second communication layer (3) for further processing.

2. The method according to claim 1, **characterized in that** the transmission influencing layer (8) influences the first protocol data unit (5) and/or at least one further protocol data unit (6) derived from the first protocol data unit (5) **in that** the first protocol data unit (5) and/or the further protocol data unit (6) is decoded, the obtained decoded information to be influenced is influenced (11) and the influenced information is re-encoded (12) into an influenced first protocol data unit (5b) and/or into an influenced further protocol data unit (6b).

3. The method according to claim 1 or 2, **characterized in that** the reception influencing layer (9) influences the further protocol data unit (6) and/or the first protocol data unit (5) derived from the further protocol data unit (6) **in that** the further protocol data unit (6) and/or the first protocol data unit (5) is decoded (10), the obtained decoded information to be influenced is influenced (11), and the influenced information is re-encoded (12) into the influenced first protocol data unit (5b) and/or into the influenced further protocol data unit (6b).

4. The method according to any one of claims 1 through 3, **characterized in that** a plurality of protocol data units are generated from the first protocol data unit (5) for a plurality of protocol layers (19, 20) and/or the first protocol data unit (5) is derived in a plurality of protocol layers (19, 20) from a plurality of protocol data units, wherein a plurality of transmission influencing layers (8) and/or reception influencing layers (9) performs a plurality of influences on a plurality of protocol data units between a plurality of protocol layers (19, 20).

5. The method according to claims 1 through 4, **characterized in that** a hardware abstraction layer and a driver layer are implemented as protocol layers (19, 20) in the second communication layer (3).

6. The method according to claim 5, **characterized in that** the transmission influencing layer (8) and/or the reception influencing layer (9) is implemented in the second communication layer (3) between the hardware abstraction layer and the hardware driver layer (20).

7. The method according to any one of claims 1 through 6, **characterized in that** the first communication layer (2) is implemented in accordance with the Automotive Open System Architecture (AUTOSAR).

8. The method according to any one of claims 1 through 7, **characterized in that** the method is performed by means of a software implementation on a controller (1), particularly on a series controller.

9. The method according to any one of claims 1 through 7, **characterized in that** the method is performed by means of a software implementation on an emulated controller (1), particularly wherein the controller is emulated in real time on a hardware-in-the-loop simulator (23).

10. The method according to any one of claims 1 through 7, **characterized in that** the method is performed by means of a software implementation on a target computer (3), particularly on a non-real-time-capable target computer (25).

11. The method according to any one of claims 1 through 10, **characterized in that** the first communication layer (2) and/or the second communication layer (3) and/or the transmission influencing layer (8) and/or the reception influencing layer (9) is/are implemented on different processing units, particularly on different processors or different cores of a processor.

## Revendications

1. Procédé pour influencer la communication par bus d'un appareil de commande (1), dans lequel la communication par bus comprend au moins une première couche de communication indépendante du matériel de bus (2) et au moins une seconde couche de communication dépendante du matériel de bus (3), dans lequel la première couche de communication (2) code au moins une information (4) dans une première unité de données de protocole (5) et la transmet à la seconde couche de communication (3) et/ou la première couche de communication (2) obtient de la seconde couche de communication (3) la première unité de données de protocole (5) et décode la première information (4) depuis la première unité de données de protocole (5), et dans lequel la seconde couche de communication (3) génère, depuis la première unité de données de protocole (5) ou depuis une unité de données de protocole supplémentaire (6) dérivée de la première unité de données de protocole (5), une information de bus (7) dépendant du matériel de bus en vue de la transmission par le bus et/ou la seconde couche de communication (3) génère depuis au moins une information de bus (7) dépendant du matériel de bus la première unité de données de protocole (5) ou une unité de données de protocole supplémentaire (6), dont peut être dérivée la première unité de données de protocole (5),
dans lequel au moins une couche d'influence d'émission (8) réalisée soit entre la première couche de communication (2) et la seconde couche de communication (3), soit au sein de la seconde couche de communication (3), influence la première unité de données de protocole (5) et/ou au moins une unité de données de protocole (6) dérivée de la première unité de données de protocole (5) et met à la disposition de la seconde couche de communication (3) la première unité de données de protocole influencée (5b) et/ou l'unité de données de protocole supplémentaire influencée (6b) en vue du traitement ultérieur et/ou
au moins une couche d'influence de réception (9) réalisée soit entre la première couche de communication (2) et la seconde couche de communication (3), soit au sein de la seconde couche de communication (3), influence l'unité de données de protocole supplémentaire (6) ou la première unité de données de protocole (5) dérivée de l'unité de données de protocole supplémentaire (6) et met à la disposition de la seconde couche de communication (3) la première unité de données de protocole influencée obtenue (5b) et/ou l'unité de données de protocole supplémentaire influencée (6b) en vue du traitement ultérieur.

2. Procédé selon la revendication 1, **caractérisé en ce que** la couche d'influence d'émission (8) influence la première unité de données de protocole (5) et/ou au moins une unité de données de protocole supplémentaire (6) dérivée de la première unité de données de protocole (5) en décodant (10) la première unité de données de protocole (5) et/ou l'unité de données de protocole supplémentaire (6), en influençant (11) l'information décodée obtenue et devant être influencée et en codant (12) à nouveau l'information influencée en une première unité de données de protocole influencée (5b) et/ou en une unité de données de protocole supplémentaire influencée (6b).

3. Procédé selon la revendication 1 ou 2, **caractérisé en ce que** la couche d'influence de réception (9) influence l'unité de données de protocole supplémentaire (6) et/ou la première unité de données de protocole (5) dérivée de l'unité de données de protocole supplémentaire (6) en décodant (10) l'unité de données de protocole supplémentaire (6) et/ou la première unité de données de protocole (5), en influençant (11) l'information décodée obtenue et devant être influencée et en codant (12) à nouveau l'information influencée en la première unité de données de protocole influencée (5b) et/ou en l'unité de données de protocole supplémentaire influencée (6b).

4. Procédé selon l'une des revendications 1 à 3, **caractérisé en ce qu'**une multitude d'unités de données de protocole pour une multitude de couches de protocole (19, 20) sont créées depuis la première unité de données de protocole (5) et/ou la première unité de données de protocole (5) est dérivée depuis une multitude d'unités de données de protocole, sachant qu'une multitude de couches d'influence d'émission (8) et/ou de couches d'influence de réception (9), entre une multitude de couches de protocoles (19, 20), exercent une multitude d'influences sur une multitude d'unités de données de protocole.

5. Procédé selon la revendication 1 à 4, **caractérisé en ce que** la seconde couche de communication (3), une couche d'abstraction de matériel et une couche de pilote sont réalisées en tant que couches de protocole (19, 20).

6. Procédé selon la revendication 5, **caractérisé en ce que** dans la couche d'influence d'émission (8) et/ou la couche d'influence de réception (9) dans la seconde couche de communication (3) est/sont réalisée(s) entre la couche d'abstraction de matériel et la couche de pilote de matériel (20).

7. Procédé selon l'une des revendications 1 à 6, **caractérisé en ce que** la première couche de communication (2) est mise en oeuvre selon l'architecture Automotive Open System Architecture (AUTOSAR).

8. Procédé selon l'une des revendications 1 à 7, **caractérisé en ce que** le procédé est exécuté par mise en oeuvre d'un logiciel dans un appareil de commande (1), en particulier un appareil de commande en série.

9. Procédé selon l'une des revendications 1 à 7, **caractérisé en ce que** le procédé est exécuté par mise en oeuvre d'un logiciel dans un appareil de commande émulé (1), en particulier sachant que l'appareil de commande (1) est émulé en temps réel dans un simulateur de type Hardware-in-the-Loop (23).

10. Procédé selon l'une des revendications 1 à 7, **caractérisé en ce que** le procédé est exécuté par mise en oeuvre d'un logiciel sur un calculateur cible (3), en particulier un calculateur cible pouvant fonctionner en temps non réel (25).

11. Procédé selon l'une des revendications 1 à 10, **caractérisé en ce que** la première couche de communication (2) et/ou la seconde couche de communication (3) et/ou la couche d'influence d'émission (8) et/ou la couche d'influence de réception est/sont exécutée(s) sur des unités de calcul différentes, en particulier sur des processeurs différents ou sur des coeurs différents d'un processeur.
